# EUROPÄISCHE PATENTSCHRIFT

(11) **EP 0 395 939 B1**
(45) Veröffentlichungstag und Bekanntmachung des Hinweises auf die Patenterteilung: **24.02.1993**
(21) Anmeldenummer: 90107388.2
(22) Anmeldetag: 19.04.1990
(51) Int. Cl.: G02C 5/22

(54) **Federscharnier für Brillen**
Resilient hinge for spectacles
Charnière élastique pour lunettes

(30) Priorität: 04.05.1989 DE 8905610 U
(43) Veröffentlichungstag der Anmeldung: 07.11.1990
(73) Patentinhaber: OBE-Werk Ohnmacht & Baumgärtner GmbH & Co. KG, 75228 Ispringen (DE)
(72) Erfinder: Drlik, Günther, D-7530 Pforzheim 8 (DE)
(74) Vertreter: Gleiss & Grosse

(56) Entgegenhaltungen:
- EP-A- 0 149 230
- EP-A- 0 166 822
- EP-A- 0 191 944
- EP-A- 0 308 533
- DE-A- 2 242 044
- DE-U- 8 622 026

## Beschreibung

Die Erfindung bezieht sich auf ein Federscharnier für Brillen zum Überdrücken des Brillenbügels über die Anschlagstellung hinaus zur federnden Anlage am Kopf des Trägers.

Solche Federscharniere, bestehend aus gelenkig miteinander verbundenem Bügel- und Mittelteilscharnier, bei welchem das Bügelscharnier mit Schieberteil zur Federaufnahme und -Führung am Brillenbügelende gegen Federwirkung verschiebbar ist, vorzugsweise mittels in der Bügelausnehmung beidseits vorgesehenen Führungsnuten, sowie einem Sperrkörper als Federanschlag, der dem Bügelende zu einsetzbar ist, sind z.B. nach dem DE-GM 88 13 180, DE-GM 88 13 181 und aus EP-A-308 533 bekannt. Hierbei kommt es auf den leichten Zusammenbau des Federscharniers mit Feder und Anschlag im Bügelende möglichst in vormontierbarer Form an.

Durch die vorliegende Erfindung wird hierzu eine Ausführung aufgezeigt, welche gegenüber den bekannten Ausführungen den Vorteil hat, daß der Zusammenbau mit Verrasten des Federscharniers unter Federdruck durch einfaches Einschieben des Sperrkörpers in Längsrichtung erfolgt, ohne daß zusätzliche Verankerungsteile oder Drehbewegungen zur Verrastung erforderlich sind.

Zur Lösung dieser Aufgabe kennzeichnet sich das Federscharnier nach dem Oberbegriff von Anspruch 1 gemäß der Erfindung durch die im kennzeichnen Teil von Anspruch 1 angeführten Merkmale Hierbei verläuft der U-Bügel am offenen Schenkelende nach innen konisch zur Aufnahme des Konusendes des Federanschlags, welcher vorzugsweise am Ende eines Federführungsbolzens sitzt und damit die Einrastung des U-Bügels als Sperrkörper sichert.

Nach einem weiteren Gedanken der Erfindung besitzt der U-Bügel im Grundquerschnitt vorzugsweise Rechteckform wobei diesem eine Anschlagnase aufgesetzt ist, welche in das Scharniergelenk reicht und der Nockenabstützung des Mittelteil-Scharnierauges zur Erzeugung eines Schnappeffekts zwischen Bügelruhe- und -Offenstellung dient. Hierdurch wird zusätzlich am Federscharnier für Überdruckstellung auch ein Schnappeffekt für Bügelruhe- und Offenstellung erreicht.

Eine bevorzugte Ausführungsform des Federscharniers für Brillen gemäß der Erfindung ist beispielsweise in der Zeichnung dargestellt und zwar zeigen:

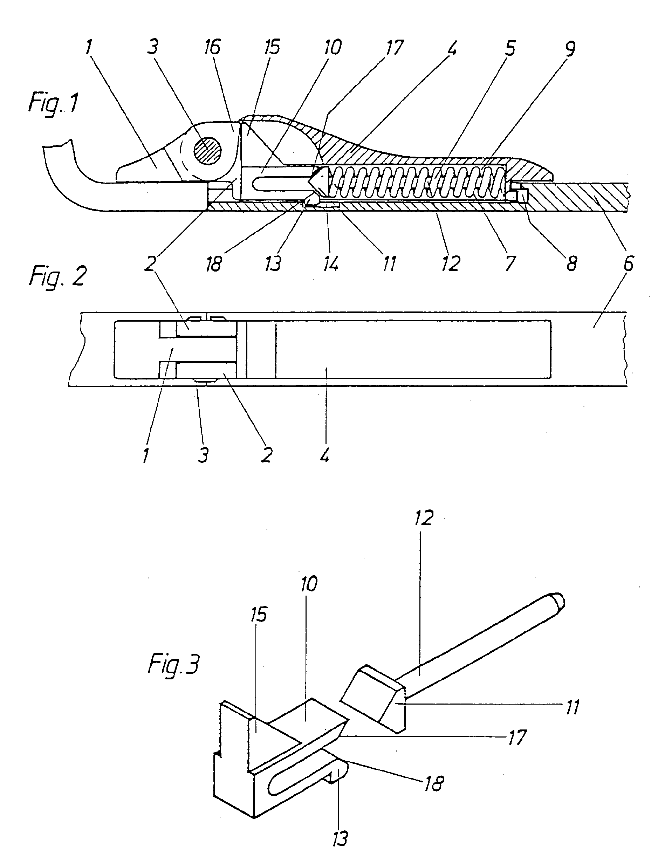

Figur 1 den Längsschnitt durch ein funktionsfähiges Federgelenk,
Figur 2 die Draufsicht auf das Federgelenk nach Figur 1,
Figur 3 die perspektivische Ansicht des zugehörigen Sperrkörpers mit Anschlagnase und Federanschlag mit Führungsbolzen.

Wie aus der Zeichnung ersichtlich wird, besteht das Federscharnier aus dem Mittelteilscharnier 1 und Bügelteilscharnier 2, welche beide mittels Gelenkschraube 3 miteinander schwenkbar verbunden sind. Das Bügelteilscharnier 2 besitzt ein Schieberteil 4, welches unter Aufnahme der Feder 5 am Brillenbügelende 6 in der Führungsaufnahme 7 in beidseitigen Führungsnuten 8 läuft. Hierbei wird die Feder 5 in der Federaufnahme 9 des Schieberteils 4 aufgenommen und steht dem Sperrkörper in Form eines U-Bügels 10 unter Vermittlung vom Federanschlag 11 mit Führungsbolzen 12 an.

Der Sperrkörper, hier in Winkelform, reicht mit seinem einem Schenkel als U-Bügel 10 in die Führungsaufnahme 7 und rastet hier mit seiner Rastnase 13 in der Ausnehmung 14 ein, während der zweite hochstehende Winkelschenkel als Anschlagnase 15 zur Abstützung des Nockens 16 des Mittelteilscharniers 1 zur Erzielung eines Schnappeffekts dient. Der U-Bügel 10 ist an seinem offenem Ende bei 17 und 18 nach innen konisch ausgebildet und dient hier der Aufnahme des Federanschlags 11 mit seinem Konusende, wodurch die Einrastung des U-Bügels 10 als Sperrkörper gesichert wird. Andererseits nimmt der Federanschlag 11 mit dem Führungsbolzen 12 die Feder 5 auf.

Der U-Bügel 10 ist am einen Schenkelende mit Rastnase 13 etwa um die Höhe des Nasenvorsprungs gegenüber dem anderen Schenkelende im Querschnitt verringert und erhält so genügend Federungseigenschaften zum Überrasten. Der U-Bügel 10 besitzt hier im Querschnitt Rechteckform und diesem (10) ist sodann die Anschlagnase 15 aufgesetzt, welche in das Scharniergelenk reicht und der Nockenabstützung 16 des Mittelteilscharniers 1 dient zur Erzeugung eines Schnappeffekts zwischen der Bügelruhe- und der -Offenstellung.

## Patentansprüche

1. Federscharnier für Brille, welches das Öffnen des Brillenbügels über die normale Tragestellung hinaus erlaubt, und welches für die Verwendung mit einem Brillenbügel vorgesehen ist, der an seinem vorderen, im montierten Zustand dem Mittelteil näher gelegenen Ende eine längliche erste Ausnehmung (7) besitzt, in der sich eine zweite Ausnehmung (14) mit einem stufenförmigen Rand an ihrem im montierten Zustand dem Mittelteil näher gelegenen Ende befindet, wobei das Scharnier besteht aus:
einem für die Befestigung am Mittelteil einer Brille vorgesehenen Mittelteilscharnier (1),
einem Bügelscharnier (2, 4), welches mit dem Mittelteilscharnier um eine Scharnierachse (3) schwenkbar verbunden werden kann, welches
ein Schieberteil (4) umfaßt, in dem eine Schraubenfeder (5), ein Federkolben (11) und ein Sperrkörper (10) angeordnet sind,
wobei das Schieberteil (4) mit Schraubenfeder, Federkolben und Sperrkörper in die erste Ausnehmung (7) des Brillenbügels so eingesetzt werden können, daß sich der Sperrkörper (10) am vorderen Ende des Schieberteils (4) befindet und durch die Wirkung der Schraubenfeder (5) in Richtung Scharnierachse (3) gedrückt wird, und das Schieberteil (4) gegen die Wirkung der Schraubenfeder (5) in Richtung des vorderen Bügelendes um eine bestimmte Strecke aus der ersten Ausnehmung (7) herausgezogen werden kann,
dadurch gekennzeichnet,
daß ein Querschnitt des Sperrkörpers (10) U-förmig ist, daß an einem ersten seiner Schenkel an dessen freiem Ende an der Außenseite eine Nase (13) ausgebildet ist,
wobei beim Einsetzen des Sperrkörpers (10) in das Schieberteil und in die erste Ausnehmung (7) dieser so angeordnet wird, daß seine beiden Schenkel von der Scharnierachse weg weisen, daß der Querschnitt des Sperrkörpers (10) in Richtung der Scharnierachse (3) betrachtet U-förmig erscheint, der Sperrkörper (10), mit der Nase (13) an der Stufe der zweiten Ausnehmung (14) federnd eingreift, und somit als Anschlag für den Federkolben (11) in der ersten Ausnehmung festrastet.

2. Federscharnier nach Anspruch 1, dadurch gekennzeichnet, daß der Sperrkörper an seinem im eingesetzten Zustand von der Scharnierachse abgewandten Ende eine konische Vertriefung (17, 18) aufweist und der Federkolben (11) mit einem konischen Ende ausgebildet ist, welches in die konische Vertiefung des Sperrkörpers eingeführt ist.

3. Federscharnier nach Anspruch 1 oder 2, dadurch gekennzeichnet, daß der Schenkel des Sperrkörpers, der mit der Nase (13) versehen ist, um etwa die Höhe der Nase dünner als der andere Schenkel ist.

4. Federscharnier nach einem der Ansprüche 1 bis 3, dadurch gekennzeichnet, daß der Sperrkörper (10) im eingesetzten Zustand aus einer Richtung normal zur Scharnierachse (3) und normal zur Längsrichtung der Schraubenfeder betrachtet einen rechteckigen querschnitt aufweist und an dem der Scharnierachse zugewandten Ende auf dem zweiten Schenkel eine Anschlagnase (15) aufweist, daß das Mittelteilscharnier (1) ein Scharnierauge mit einer Nocke (16) aufweist, welche im montierten Zustand des Scharniers mit der Anschlagnase (15) derart zusammenwirkt, daß, wenn der Brillenbügel in eine Stellung gebracht wird, die sich zwischen der geschlossenen Stellung und der normalen Tragestellung befindet, die Schrauben feder komprimiert wird und nach dem Auslassen des Bügels ein Einschnappen in eine der beiden Stellungen bewirkt.

## Claims

1. A spring hinge for eyeglasses, which hinge permits an opening of the bow of the eyeglasses beyond its normal wearing position and is intended to be used with a bow which at its forward end that is nearer to the rim when the bow is mounted has an elongate first opening (7), which contains a second opening (14), that has a stepped edge that at that end which is nearer to the rim when the bow is mounted, which hinge consists of:
a rim-side hinge member (1) for fixation to the rim of eyeglasses; a bow-side hinge member (2, 4) which is adapted to be pivoted to the rim-side hinge member by a hingepin (3) and which comprises a slider (4), in which a coil spring (5), a spring piston (11) and a locking member (10) are disposed; wherein the slider (4) with the coil spring, spring piston and locking member are adapted to be inserted into the first opening (7) of the bow in such a matter that the locking member (10) is disposed at the forward end of the slider (4) and is urged towards the hingepin (3) by the action of the coil spring (5), and the slider (4) is adapted to be pulled out of the first opening (7) over a certain distance towards the forward end of the bow against the action of the coil spring (5),
characterized in that
one cross-section of the locking member (10) is U-shaped, a nose (13) is formed on the outside of the free end of a first leg of the locking member, during the insertion of the locking member (10) into the slider and into the first opening (7) the locking member is so arranged that its two legs are directed away from the hingepin, that the cross-section of the locking member (10), viewed in the direction towards the hingepin (3), appears to be U-shaped, and that the nose (13) of the locking member (10) resiliently engages the step of the second opening (14) and thus is snap-locked in the first opening as a stop for the spring piston (11).

2. A spring hinge according to claim 1, characterized in that the locking member has a conical recess (17, 18) at that end which is remote from the hingepin when the locking member has been inserted, and the spring piston (11) is formed with a conical end, which is inserted into the conical recess of the locking member.

3. A spring hinge according to claim 1 or 2, characterized in that that leg of the locking member which is provided with the nose (13) is thinner by about the height of the nose than the other leg.

4. A spring hinge according to any of claims 1 to 3, characterized in that the locking member (10) when it has been inserted and is viewed in a direction that is normal to the hingepin (3) and normal to the longitudinal direction of the coil spring has a rectangular cross-section and at that end which faces the hingepin is provided on the second leg with a stop nose (15), and that the rim-side hinge member (1) comprises a hinge eye, that is provided with a cam (16), which when the hinge is mounted cooperates with the stop nose (15) in such a manner that upon a movement of the bow to a position between its closed position and its normal wearing position the coil spring is compressed and causes the bow to snap into either of the two positions when the bow is subsequently released.

## Revendications

1. Charnière élastique pour lunettes, permettant l'ouverture de la branche de lunette au-delà de la position de port normale et prévue pour l'utilisation avec une branche de lunettes, dont l'extrémité, placée le plus près de la partie médiane à l'état monte, comporte un premier évidement (7), dans lequel se trouve un deuxième évidement (14) présentant, sur son extrémité placée le plus près de la partie médiane à l'état monté, une bordure étagée, la charnière comprenant :
une charnière de partie médiane (1), prévue pour assurer la fixation sur la partie médiane des lunettes,
une charnière de branche (2,4), pouvant être reliée pivotante à la charnière de partie médiane, autour d'un axe de charnière (3), et comprenant une partie de curseur (4), qui loge un ressort hélicoïdal (5), un piston à ressort (11) et un corps de blocage (10),
la partie de curseur (4), avec le ressort hélicoïdal, le piston à ressort et le corps de blocage pouvant être insérée dans le premier évidement (7) de la branche de lunette, de telle façon que le corps de blocage (10) se trouve à l'extrémité avant de la partie de curseur (4) et soit pressé, par l'action du ressort hélicoïdal (5), en direction de l'axe de charnière (3), et que la partie de curseur (4) puisse être extraite d'une distance prédéterminée, hors du premier évidement (7), à l'encontre de l'action du ressort hélicoïdal (5), en direction de l'extrémité avant de la branche,
caractérisée
en ce qu'une section transversale du corps de blocage (10) est en forme de U,
en ce qu'un ergot (13) est réalisé sur une première de ses branches, à son extrémité libre, en face extérieure, si bien que, lors de l'insertion du corps de blocage (10) dans la partie de curseur et dans le premier évidement (7), le corps de blocage est disposé de telle façon que ses deux branches sont écartées de l'axe de charnière, et en ce que la section transversale du corps de blocage (10) présente une forme en U, en direction de l'axe de charnière (3), le corps de blocage (10), avec l'ergot (13), s'engage élastiquement sur l'étagement du deuxième évidement (14), et ainsi s'encliquette fermement dans le premier évidement, en servant de butée au piston à ressort (11).

2. Charnière élastique selon la revendication 1, caractérisée en ce que le corps de blocage présente à son extrémité, opposée à l'axe de charnière à l'état inséré, une cavité conique (17,18) et le piston à ressort (11) est réalisé avec une extrémité conique, introduite dans la cavité conique du corps de blocage.

3. Charnière élastique selon la revendication 1 ou 2, caractérisée en ce que la branche du corps de blocage, pourvue de l'ergot (13), est plus mince, à peu près de la valeur de la hauteur de l'ergot, que l'autre branche.

4. Charnière élastique selon l'une des revendications 1 à 3, caractérisée en ce qu'à l'état inséré, le corps de blocage (10) présente, en observant d'une direction perpendiculaire à l'axe de charnière (3) et perpendiculaire à la direction longitudinale du ressort hélicoïdal, une section transversale rectangulaire et, à l'extrémité, tournée vers l'axe de charnière, sur la deuxième branche, un ergot de butée (15), en ce que la charnière de partie médiane (1) présente un oeillet de charnière avec un bouton (16), qui coopère, à l'état monté de la charnière, avec l'oeillet de charnière (15), de telle façon que, lorsque la branche de lunettes est placée dans une position se trouvant entre la position de fermeture et la position de port normale, le ressort hélicoïdal est comprimé et provoque après le relâchement de la branche un encliquetage dans l'une de deux positions.
